# EUROPEAN PATENT APPLICATION

(11) **EP 3 498 064 A1**
(43) Date of publication of application: **19.06.2019**
(21) Application number: 17841442.1
(22) Date of filing: 10.08.2017
(51) Int. Cl.: A01B 33/08

(54) **FORWARD/REVERSE MOVEMENT SWITCHING DEVICE OF AGRICULTURAL MACHINE**

(30) Priority: 15.08.2016 JP 2016159325; 15.08.2016 JP 2016159327
(71) Applicant: Yanmar Co., Ltd., Osaka-shi, Osaka 530-8311 (JP)
(72) Inventor: ISHIKAWA, Akira, Osaka-shi Osaka 530-8311 (JP); IKAI, Koji, Osaka-shi Osaka 530-8311 (JP)
(74) Representative: Kuhnen & Wacker Patent- und Rechtsanwaltsbüro PartG mbB
(86) International application number: PCT/JP2017/029030
(87) International publication number: WO 2018/034219

(57) **Abstract**

A forward-reverse switching lever 14 for switching between forward traveling and reverse traveling is provided to a side of the operation handle 8. An erroneous operation prevention mechanism 40 for restraining reverse shifting of the forward-reverse switching lever 14 when it is operated is provided to the same side of the operation handle 8. An accelerator lever 15 for adjusting the speed of an engine 3 is provided. Operating the forward-reverse switching lever releases position holding of the accelerator lever and causes switchover between forward traveling and reverse traveling. To reduce operational load and prevent erroneous reverse operation, an interlocking mechanism 30 for moving the accelerator lever 15 to low-speed side in conjunction with reverse operation with the forward-reverse switching lever 14 is interposed between the forward-reverse switching lever 14 and the accelerator lever 15. The interlocking mechanism 30 has an interlocking range α, in which the accelerator lever 15 operates in conjunction with operation of the forward-reverse switching lever 14, and a non-interlocking range β, in which a forward-reverse switching device 28 is actuated by operation of the forward-reverse switching lever 14 but the accelerator lever 15 does not operate in conjunction with the operation of the forward-reverse switching lever 14.

## Description

### Technical Field

The present invention relates to a technique for preventing an erroneous operation caused with a forward-reverse switching lever used to switch between forward traveling and reverse traveling of a cultivator that is an agriculture machine and for reducing a load to operate the forward-reverse switching lever.

### Background Art

According to a conventionally-known technique (see, e.g., Patent Literature 1 (hereinafter, referred to as PTL 1)), a cultivator includes a handle, a forward-reverse switching lever and an accelerator lever disposed in a rear portion of the handle, and an interlocking mechanism configured to simultaneously cause switchover from forward traveling to reverse traveling and turning of the accelerator lever to a low-speed side in response to an operation of the forward-reverse switching lever. Consequently, an operator can execute the switchover from forward traveling to reverse traveling without releasing his/her hand from the handle. In addition, this technique reduces the number of revolutions of an engine at the time of the switchover to reverse traveling, thereby preventing sudden reverse traveling of the cultivator. This makes it possible to prevent the accelerator lever from being left unreturned to the low-speed side at the time of the switchover to reverse traveling.

Another conventionally-known technique (see, e.g., Patent Literature 2 (hereinafter, referred to as PTL 2)) employs restraining means configured to restrict a shift lever from being shifted to a position for reverse traveling in a state where a clutch lever is at an engagement position.

### Citation List

### Patent Literature

PTL 1: Japanese Utility Model Registration No. 2605471 (1994)
PTL 2: Japanese Patent Application Laid-Open No. 2009-220686

### Summary of Invention

### Technical Problem

According to the technique disclosed in PTL 1, however, the cultivator travels in a reverse direction in response to an operation of the forward-reverse switching lever. Therefore, when an operator unintentionally operates the forward-reverse switching lever, the cultivator may travel in a reverse direction against the operator's intention. Meanwhile, the technique disclosed in PTL 2 may hardly permit an unintentional operation for reverse traveling. However, according to this technique, a member for selecting reverse traveling is not provided to the handle. The operation for reverse traveling is performed with the shift lever, which protrudes from a transmission case. Thus, this technique involves poor operability.

In view of the circumstances described above, some aspects of the present invention are to provide a forward-reverse switching operation device including an erroneous operation prevention mechanism provided near a forward-reverse switching lever, the erroneous operation prevention mechanism being configured to restrain the forward-reverse switching lever from being operated to select reverse traveling, the erroneous operation prevention mechanism including a restraining member and a releasing lever that are operable substantially simultaneously by a single hand of an operator. Such a forward-reverse switching operation device is capable of preventing an erroneous operation that may otherwise be caused with a forward-reverse switching lever, and provides good operability.

According to the traditional technique described above, the position holding of the accelerator lever needs to be released in an initial range of an operation stroke of the forward-reverse switching lever, and thereafter switchover to reverse traveling needs to be performed. In order to achieve this, a long hole is provided to an operation arm. However, such a configuration requires an operator to grip the forward-reverse switching lever against a biasing force of a spring from a beginning to an end of a stroke of an interlocking body, thereby resulting in a gradually increased load to operate the forward-reverse switching lever. Thus, in order to select reverse traveling, the operator needs to keep griping the forward-reverse switching lever with a large load. In addition, actual mass-produced machines include an operation arm having a rotary base made of a spring steel. When the position holding of the accelerator lever is released, the spring steel is bent alone, and the interlocking body does not stroke. Such a configuration requires precise adjustment in assembling, which takes time. Moreover, this configuration involves poor durability, since the spring steel is bent in response to an operation of the forward-reverse switching lever. In addition, the problem of the large load to grip the forward-reverse switching lever remains unsolved.

In view of these, some aspects of the present invention are to provide an interlocking mechanism which makes it possible to perform releasing of the position holding of the accelerator lever and switchover between forward traveling and reverse traveling with single operation means that is the forward-reverse switching lever at different timings. Such an interlocking mechanism also makes it possible to reduce the operational load.

### Solution to Problem

Some aspects of the present invention have been made in order to solve the above problems. The following describes means for solving these problems.

A first aspect of the present invention provides a forward-reverse switching operation device for an agriculture machine, including a forward-reverse switching lever provided to one of left and right sides of an operation handle, the forward-reverse switching lever being used to cause a forward-reverse switching device to switch between forward traveling and reverse traveling, wherein an erroneous operation prevention mechanism is provided to the one of the left and right sides of the operation handle, the erroneous operation prevention mechanism being configured to restrain the forward-reverse switching lever from being shifted to a position for reverse traveling when the forward-reverse switching lever is operated, the erroneous operation prevention mechanism includes a restraining member configured to restrain turning of the forward-reverse switching lever and a releasing lever used to release the restraining, and the forward-reverse switching lever and the releasing lever are operable simultaneously by a single hand of an operator.

The first aspect of the present invention may be configured such that a direction in which the forward-reverse switching lever is operated to select reverse traveling and a direction in which the releasing lever is operated to release the restraining are different from each other.

The first aspect of the present invention may be configured such that a restraining action of the erroneous operation prevention mechanism is achieved between the forward-reverse switching lever and the restraining member, the restraining action being performed by a cable terminal of a wire via which the forward-reverse switching lever and the forward-reverse switching device are linked to each other.

A second aspect of the present invention provides a forward-reverse switching operation device for an agriculture machine, including a forward-reverse switching lever provided to an operation handle, the forward-reverse switching lever being linked to a forward-reverse switching device and being used to switch between forward traveling and reverse traveling, wherein an accelerator lever is disposed near the forward-reverse switching lever, the accelerator lever being used to adjust the number of revolutions of an engine, an interlocking mechanism is interposed between the forward-reverse switching lever and the accelerator lever, the interlocking mechanism being configured to cause the accelerator lever to move to a low-speed side in conjunction with an operation of the forward-reverse switching lever for selecting reverse traveling, and the interlocking mechanism has an interlocking range in which the accelerator lever operates in conjunction with an operation of the forward-reverse switching lever and a non-interlocking range in which the forward-reverse switching device is actuated by an operation of the forward-reverse switching lever but the accelerator lever does not operate in conjunction with the operation of the forward-reverse switching lever.

The second aspect of the present invention may be configured such that the interlocking range and the non-interlocking range are defined in a cam mechanism in an operation arm included in the interlocking mechanism interposed between the forward-reverse switching lever and the accelerator lever.

The second aspect of the present invention may be configured such that the cam mechanism is made of a long hole, which guides a fastening member inserted thereinto, the fastening member being provided at an end of a connecting member via which the forward-reverse switching device and the forward-reverse switching lever are linked to each other.

### Advantageous Effects of Invention

Some aspects of the present invention provide effects described below.

Even when an operator grips and operates the forward-reverse switching lever carelessly, the forward-reverse switching lever would not be turned to start reverse traveling, unless the releasing lever is operated simultaneously with the operation of the forward-reverse switching lever. This configuration can prevent an erroneous operation. In addition, the operator can operate the forward-reverse switching lever and the releasing lever with his/her single hand. This configuration can maintain good operability.

According to the interlocking mechanism of the traditional technique, the entire stroke of the forward-reverse switching lever is linked to a shifting operation of the accelerator lever to the low-speed side, and therefore it has been troublesome to adjust an acting position for causing the accelerator lever to move toward the low-speed side. Meanwhile, according to the aspects of the present invention, it is only necessary to align an end of the interlocking range in the cam mechanism with the interlocking mechanism. Thus, it is possible to easily perform the adjustment in the assembling. In addition, a force to operate the accelerator lever is not necessary in the non-interlocking range. Thus, it is possible to reduce the operational load.

### Brief Description of Drawings

[FIG. 1] A side view of an entire cultivator including a forward-reverse switching operation device according to an aspect of the present invention.
[FIG. 2] A perspective view of an interlocking mechanism of a forward-reverse switching lever provided to an operation handle.
[FIG. 3] A perspective view of the forward-reverse switching lever.
[FIG. 4] A side view of the forward-reverse switching lever.
[FIG. 5] A perspective view of an operation arm.
[FIG. 6] A side view illustrating how the operation arm and an accelerator lever operate in conjunction with each other.
[FIG. 7] A view illustrating a relation between a stroke and a load of the forward-reverse switching lever.
[FIG. 8] A perspective view of the forward-reverse switching lever and an erroneous operation prevention mechanism.
[FIG. 9] A side view of the forward-reverse switching lever and the erroneous operation prevention mechanism.
[FIG. 10] A perspective view of a restraining member and a releasing lever.
[FIG. 11] A view illustrating how an erroneous operation prevention mechanism according to a second embodiment is operated.
[FIG. 12] A side view of a releasing lever of the erroneous operation prevention mechanism according to the second embodiment.
[FIG. 13] A view illustrating how an erroneous operation prevention mechanism according to a third embodiment is operated.
[FIG. 14] A side view of an attachment member of the erroneous operation prevention mechanism according to the third embodiment.
[FIG. 15] A plan view and a side view illustrating a restraining member according to a fourth embodiment and how the restraining member is operated.

### Description of Embodiments

The following description first deals with an overall configuration of a cultivator 1 that is an agriculture machine. The description below is given with "direction F" being defined as the front.

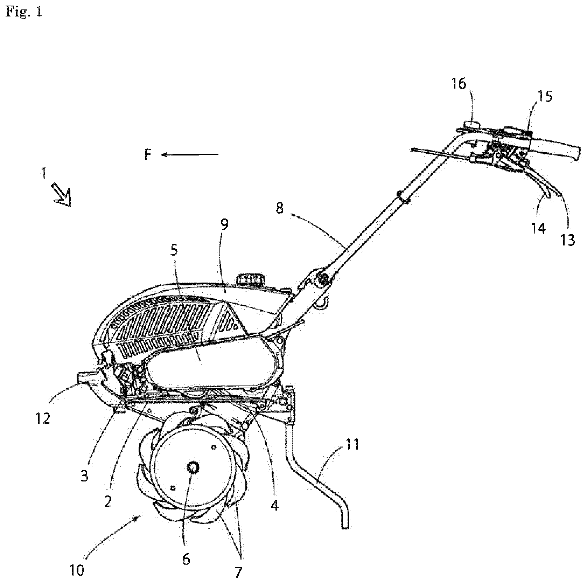

Referring to FIG. 1, the cultivator 1 includes a machine body frame 2, an engine 3, a transmission case 4, and a transfer case 5. The engine 3 is mounted on the machine body frame 2. The transmission case 4 is disposed in a standing manner at a location that is behind the engine 3 and in the center in a left-right direction (i.e., laterally) of the machine body frame 2. The transfer case 5 is disposed between an upper portion of the transmission case 4 and the engine 3, thereby enabling power transmission therebetween. Below the transmission case 4, a tilling shaft 6 is provided so as to extend laterally and horizontally. Namely, the tilling shaft 6 is disposed perpendicularly to direction F, which is a traveling direction. The tilling shaft 6 is provided with tilling tines 7. The tilling tines 7 are fixed to the tilling shaft 6 such that the tilling tines 7 are arranged radially at predetermined intervals. The tilling shaft 6 and the tilling tines 7 constitute a tilling device 10. Rotation of the tilling shaft 6 also causes the cultivator 1 to travel.

Above the engine 3, a fuel tank is disposed. The engine 3 and the fuel tank are covered with an engine hood 9. The machine body frame 2 has a rear portion to which a resistance bar 11 is attached such that a vertical height of the resistance bar 11 is adjustable. The machine body frame 2 has a front end to which a bumper 12 is attached.

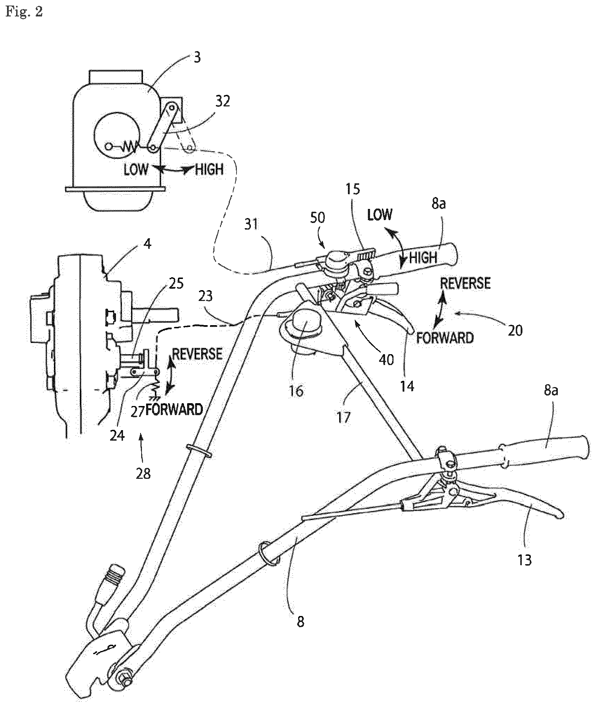

An upper portion of the transmission case 4, which is located in a rear portion of the machine body, is fixed to a base of an operation handle 8. The operation handle 8 protrudes obliquely upward toward the rear, and is A-shaped in a plan view. As illustrated in FIG. 2, the operation handle 8 has, in its rear portion, grips 8a to be gripped by an operator. In the vicinity of the grip 8a disposed on the left side with respect to the traveling direction, a traveling clutch lever 13 is disposed. The traveling clutch lever 13 is connected, via a wire, to a belt-tension type traveling clutch accommodated in the transfer case 5. When the operator grips the traveling clutch lever 13, the traveling clutch is engaged. Accordingly, driving power from the engine 3 is transferred to the tilling shaft 6, thereby allowing the cultivator 1 to travel and perform tilling. When the operator releases the traveling clutch lever 13, the traveling clutch is disengaged. Accordingly, the driving power is shut off, thereby stops the traveling and the tilling of the cultivator 1. Thus, for example, in a case of overturning of the cultivator 1 during work, the operator can cause the traveling clutch to be disengaged to stop the cultivator 1 merely by releasing the hand from the traveling clutch lever 13. This can prevent the clutch from being engaged against the operator's intention, for example.

In the vicinity of the grip 8a disposed on the right side of the operation handle 8, a forward-reverse switching operation device 20, an accelerator lever 15, and an emergency stop button 16 are disposed. The forward-reverse switching operation device 20 includes a forward-reverse switching lever 14, an interlocking mechanism 30, and an erroneous operation prevention mechanism 40. The emergency stop button 16 is disposed on a connecting rod 17 via which the left and right sides of the operation handle 8 are connected to each other. Pressing the emergency stop button 16 can stop the engine 3.

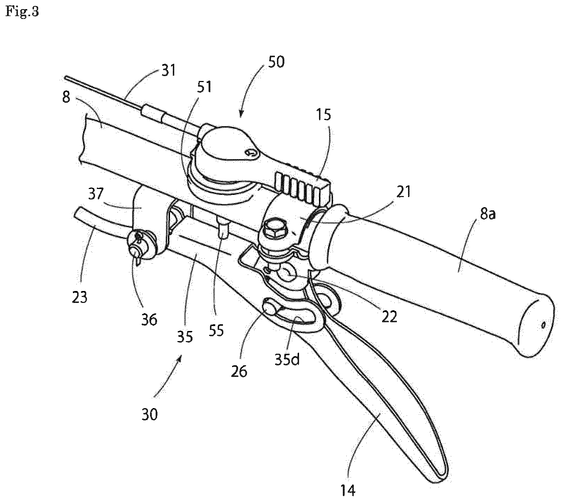

As illustrated in FIGs. 2 to 4, a front upper portion of the forward-reverse switching lever 14 is vertically turnably supported, via a pivotal support shaft 22, on an attachment member 21 fixed to a front portion of the grip 8a of the operation handle 8. This allows the operator to operate the forward-reverse switching lever 14 while gripping the forward-reverse switching lever 14 together with the grip 8a. A front lower portion of the forward-reverse switching lever 14 is connected, via a wire 23 that is a connecting member, to a switching arm 24 provided to the transmission case 4. A rear end of the wire 23 is fixed to a pin-shaped cable terminal 26 that is a fastening member. The cable terminal 26 is disposed perpendicularly to a longitudinal direction (i.e., disposed laterally). The cable terminal 26 is inserted into and fastened at a pin hole opened laterally in the front lower portion of the forward-reverse switching lever 14.

As illustrated in FIG. 2, one end of the switching arm 24 is pivotally supported on the transmission case 4, and the other end of the switching arm 24 is coupled to the wire 23 and a spring 27. The spring 27 biases the switching arm 24 in a direction for selecting forward traveling. A protrusion of the switching arm 24 is connected to one end of a shifter shaft 25, thereby enabling the switching arm 24 and the shifter shaft 25 to operate in conjunction with each other. The shifter shaft 25 is configured to operate the forward-reverse switching clutch accommodated in the transmission case 4. The forward-reverse switching clutch includes a shifter fixed to the shifter shaft 25. The shifter is designed to slide to change an engagement mode of an engagement claw to cause the tilling shaft 6 to rotate in a forward or reverse direction. The forward-reverse switching clutch is normally kept at forward traveling side by the biasing force of the spring 27. Gripping and turning the forward-reverse switching lever 14 pulls the wire 23 against the force of the spring 27 to turn the switching arm 24. This causes the shifter shaft 25 to slide, thereby shifting the forward-reverse switching clutch to a position for reverse traveling. A forward-reverse switching device 28 is configured as described above. In the above configuration, the forward-reverse switching clutch includes the engagement claw that is to be engaged. However, the present invention is not limited to this. Alternatively, the forward-reverse switching clutch may include a gear that is to be engaged or an electromagnetic clutch that is to be turned on and off.

As illustrated in FIG. 2, the accelerator lever 15 is connected to a control lever 32 of the engine 3 via a wire 31. The control lever 32 is configured to change the number of revolutions of the engine 3 (engine speed) to adjust amounts of fuel and intake air. For example, in a case where the engine 3 is a gasoline engine, the control lever 32 changes opening of a throttle valve.

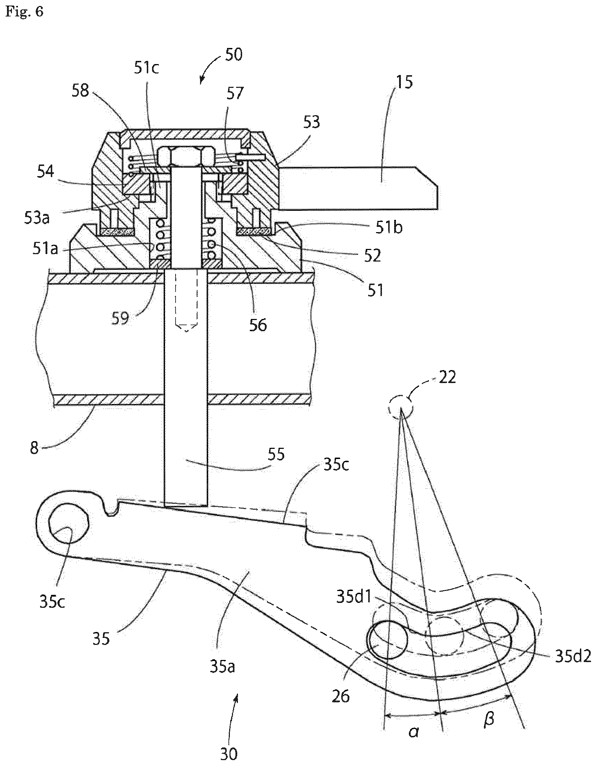

The accelerator lever 15 is attached to the operation handle 8 via an operated-position holding/releasing mechanism 50. The accelerator lever 15 is configured to operate in conjunction with the forward-reverse switching lever 14 via the interlocking mechanism 30. As illustrated in FIG. 6, the operated-position holding/releasing mechanism 50 includes a fixing member 51, a lever base 53, a pressing member 54, a releasing shaft 55, a pressing spring 56, and a lever spring 57, for example. The fixing member 51 is fixed to the operation handle 8. The lever base 53 is externally fitted onto the fixing member 51 via a friction plate 52 in such a manner as to allow the lever base 53 to turn. The pressing member 54 has a cylindrical shape, and is configured to press the lever base 53 downward. The releasing shaft 55 is slidably inserted into axial centers of the fixing member 51, the lever base 53, and the pressing member 54. The pressing spring 56 is configured to bias the releasing shaft 55, the pressing member 54, and the lever base 53 downward with respect to the fixing member 51. The lever spring 57 is interposed between the lever base 53 and the pressing member 54, and is configured to bias the accelerator lever 15 so that the accelerator lever 15 is turned toward a low-speed side.

The fixing member 51 has a cylindrical shape having a shaft hole 51a in its center. The releasing shaft 55 penetrates through the shaft hole 51a in a top-bottom direction (i.e., vertically). The shaft hole 51a internally includes, in its lower portion, the pressing spring 56. The pressing spring 56 is disposed between an inner surface of the shaft hole 51a and the releasing shaft 55. An upper end of the pressing spring 56 is in contact with an upper portion of the inner surface of the shaft hole 51a, and a lower end of the pressing spring 56 is in contact with a step of the releasing shaft 55 via a washer 59. The releasing shaft 55 is biased, by the pressing spring 56, downward with respect to the fixing member 51. The lever base 53 is externally fitted onto an outer periphery 51b of the fixing member 51 via the friction plate 52. The lever base 53 has a center hole into which the pressing member 54 is attached. With this configuration, when the releasing shaft 55 is biased downward by the pressing spring 56, the lever base 53 is pressed downward via a washer 58 and the pressing member 54, so that friction forces are generated between a lower surface of the lever base 53, an upper surface of the outer periphery 51b of the fixing member 51, and the friction plate 52. Thanks to these friction forces, the accelerator lever 15 having been turned to a desired position is held at the position.

The lever base 53 has a cylindrical shape whose through hole has an inner peripheral step 53a. On the inner peripheral step 53a, the pressing member 54 having a cylindrical shape is rotatably accommodated. The shaft hole of the pressing member 54 and an outer periphery of a shaft 51c, which is in an upper portion of the fixing member 51, are spline-fitted to each other. Thus, the pressing member 54 is fitted to the fixing member 51 in such a manner that the pressing member 54 can vertically slide with respect to the fixing member 51 but cannot rotate. The lever spring 57 is fastened between an upper portion of the pressing member 54 and an inner periphery of the lever base 53. The lever spring 57 biases the accelerator lever 15 so that the accelerator lever 15 is turned toward the low-speed side. In addition, the releasing shaft 55 has a lower portion penetrating through the operation handle 8 and protruding from the operation handle 8 downward. The lower portion of the releasing shaft 55 can reach a position at which the lower portion of the releasing shaft 55 comes in contact with an upper surface of an operation arm 35 (described later).

With such a configuration, turning the accelerator lever 15 toward a high-speed side causes the pressing spring 56 to exert a spring force to bias the lever base 53 downward, so that the accelerator lever 15 is held at a desired turned position by friction resistance between the lever base 53, the friction plate 52, and the fixing member 51. The pressing spring force of the pressing spring 56 is set to be greater than a spring force of the lever spring 57 that is returning and a force of the control lever 32 that is returning to the low-speed side. Thus, the accelerator lever 15 would not be returned to the low-speed side.

Then, in a state where the accelerator lever 15 has been turned to the high-speed side, gripping and turning the forward-reverse switching lever 14 causes the operation arm 35 to be turned upward, so that the releasing shaft 55 is raised. This releases the pressing force of the lever base 53 with respect to the fixing member 51, thereby reducing the friction resistance for the position holding. Accordingly, the accelerator lever 15 is turned toward the low-speed side by the biasing force of the lever spring 57, thereby causing the engine 3 to run at a low engine speed. Further turning the forward-reverse switching lever 14 results in switchover of the forward-reverse switching device 28, so that the machine body travels in a reverse direction.

Next, the following describes the interlocking mechanism 30 with reference to FIGs. 2 to 6.

In conjunction with the turning of the forward-reverse switching lever 14, the interlocking mechanism 30 releases the accelerator lever 15 having been turned to the high-speed side and causes the accelerator lever 15 to be turned toward the low-speed side. The interlocking mechanism 30 is interposed between the forward-reverse switching lever 14 and the releasing shaft 55. The interlocking mechanism 30 is constituted by the operation arm 35.

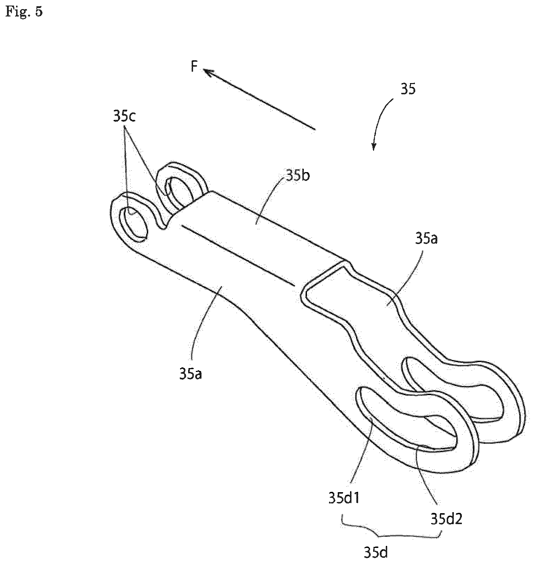

As illustrated in FIG. 5, the operation arm 35 is made of a plate bent into a substantially inverse U-shape in a front view. The operation arm 35 includes left and right side plates 35a and a connecting plate 35b via which front upper portions of the left and right side plates 35a are connected to each other. Front ends of the side plates 35a have pivoting fulcrum holes 35c, and rear portions of the side plates 35a have arc-shaped long holes 35d which are long in a front-rear direction and by which a cam is defined. The connecting plate 35b is positioned below the operated-position holding/releasing mechanism 50. The connecting plate 35b is a contact surface with which the lower end of the releasing shaft 55 can come in contact.

Into the pivoting fulcrum holes 35c, a pivotal support shaft 36 is inserted. Thus, a front portion of the operation arm 35 is pivotally supported, via the pivotal support shaft 36, on a support 37 fixed at a location that is forward of the fixing member 51 and downward of the handle 8. The support 37 protrudes downward from the handle 8.

Into the long holes 35d, the cable terminal 26 is inserted. In conjunction with turning of the forward-reverse switching lever 14, the cable terminal 26 slides inside the long holes 35d. The sliding of the cable terminal 26 causes the operation arm 35 to be turned up or down. Thanks to the shapes of the long holes 35d defining the cam, a force to turn the forward-reverse switching lever 14 (i.e., a force to grip the forward-reverse switching lever 14) is smaller than that of the traditional techniques.

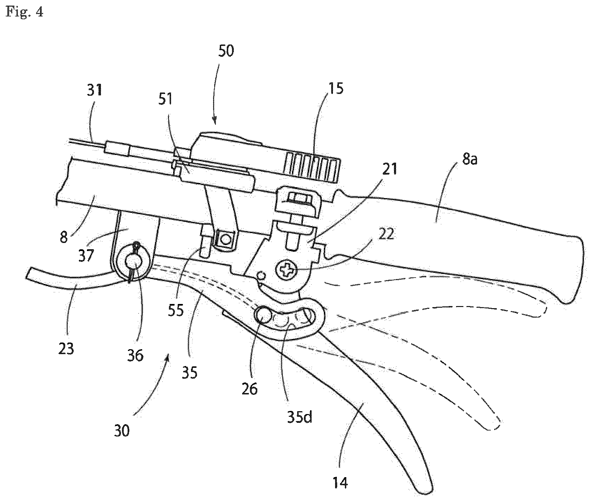

The long holes 35d are formed as a cam profile, which slidingly guides the cable terminal 26 inserted into the long holes 35d. As illustrated in FIGs. 4 and 6, the cam profile has an interlocking range α and a non-interlocking range β. In the interlocking range α, the accelerator lever 15 operates in conjunction with an operation of the forward-reverse switching lever 14. In the non-interlocking range β, the forward-reverse switching device 28 is actuated by an operation of the forward-reverse switching lever 14 but the accelerator lever 15 does not operate in conjunction with the operation of the forward-reverse switching lever 14.

Specifically, each of the long holes 35d has a front portion that is a front long hole 35d1. The front long hole 35d1 extends obliquely linearly such that a distance between the front long hole 35dl and the pivotal support shaft 22 increases as it gets closer to the rear side. Inside the front long holes 35d1 formed as above, the cable terminal 26 slides along circular loci concentric about the pivotal support shaft 22. A range in which the cable terminal 26 slides inside the front long holes 35dl in this manner corresponds to the interlocking range α for causing the operation arm 35 to be turned up or down. A difference in stroke of the forward-reverse switching lever 14 before and after turning of the forward-reverse switching lever 14, that is, a radial difference of the forward-reverse switching lever 14 corresponds to a length required to raise the releasing shaft 55 to release the holding of the operational position of the accelerator lever 15.

Meanwhile, each of the long holes 35d has a rear portion that is a rear long hole 35d2, which follows the interlocking range α and in which the operation arm 35 is not turned. The rear long hole 35d2 is formed such that a distance between the rear long hole 35d2 and the pivotal support shaft 22 is constant, i.e., such that the rear long hole 35d2 is shaped in an arc having a constant radius about the pivotal support shaft 22, in order not to raise the releasing shaft 55 even when the forward-reverse switching lever 14 is operated, in other words, in order not to turn the operation arm 35 even when the forward-reverse switching lever 14 is further turned.

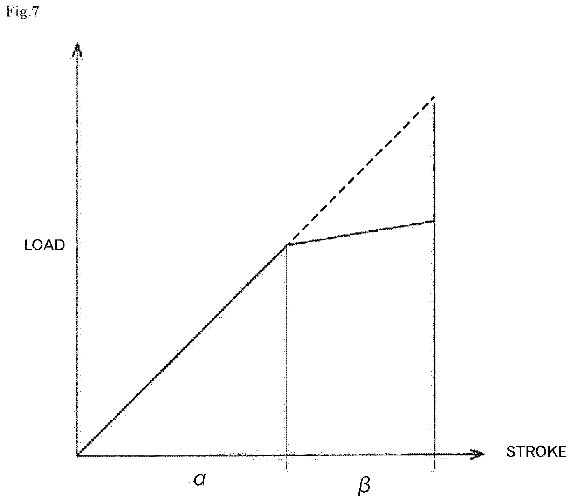

With this configuration, when the operator turns (grips) the forward-reverse switching lever 14 during a tilling work with the cultivator 1 moving forward, the wire 23 is pulled and the operation arm 35 is turned upward via the cable terminal 26 while the cable terminal 26 is in the interlocking range α. The upward turning of the operation arm 35 raises the releasing shaft 55. At a time when the releasing shaft 55 reaches a position at which friction held between the fixing member 51 and the lever base 53 is released, the accelerator lever 15 is returned to the low-speed position by a biasing force of the lever spring 57. A force to grip the forward-reverse switching lever 14 at this time increases gradually, as shown by a solid line in FIG. 7.

While the cable terminal 26 is in the non-interlocking range β following the interlocking range α, the operation arm 35 would not be turned even when the forward-reverse switching lever 14 is turned. Rather, the cable terminal 26 is further pulled, thereby the switching arm 24 is turned. This causes switchover of the forward-reverse switching device 28 from forward traveling to reverse traveling. At this time, it is no longer necessary to push the releasing shaft 55 upward, and therefore an increase in operational force to grip the forward-reverse switching lever 14 decreases, as illustrated in FIG. 7. At this time, however, a force to pull the wire 23 against the force of the spring 27 and a force to hold the releasing shaft 55 at the position against the pressing spring 56 are necessary, and therefore the operational force slightly increases. A broken line in FIG. 7 indicates a relation between a stroke of a forward-reverse switching lever 14 and a force (load) to operate the forward-reverse switching lever 14 in the configuration of the traditional technique employing an operation arm made of a spring steel. According to such a traditional configuration, the operational force (load) over an entire stroke to turn the forward-reverse switching lever 14 to bend the spring steel is significantly larger than that in the configuration of the present embodiment employing the operation arm 35 described above.

As described above, a forward-reverse switching operation device 20 for an agriculture machine includes the forward-reverse switching lever 14 provided to the operation handle 8, the forward-reverse switching lever 14 being linked to the forward-reverse switching device 28 and being used to switch between forward traveling and reverse traveling. The accelerator lever 15 is disposed near the forward-reverse switching lever 14, the accelerator lever 15 being used to adjust the number of revolutions of the engine 3. The interlocking mechanism 30 is interposed between the forward-reverse switching lever 14 and the accelerator lever 15, the interlocking mechanism 30 being configured to cause the accelerator lever 15 to move to the low-speed side in conjunction with an operation of the forward-reverse switching lever 14 for selecting reverse traveling. The interlocking mechanism 30 has the interlocking range α, in which the accelerator lever 15 operates in conjunction with an operation of the forward-reverse switching lever 14, and the non-interlocking range β, in which the forward-reverse switching device 28 is actuated by an operation of the forward-reverse switching lever 14 but the accelerator lever 15 does not operate in conjunction with the operation of the forward-reverse switching lever 14. With this configuration, merely by operating the forward-reverse switching lever 14 alone, it is possible to cause the accelerator lever 15 to be turned to the low-speed side by the interlocking mechanism 30, and thereafter to perform switchover from forward traveling to reverse traveling. In addition, a force to operate the forward-reverse switching lever 14 at that time can be significantly reduced, as compared to that of the traditional techniques.

The interlocking range α and the non-interlocking range β are defined in the cam mechanism in the operation arm 35 included in the interlocking mechanism 30, which is interposed between the forward-reverse switching lever 14 and the accelerator lever 15. Thus, it is possible to easily redefine a partition between the interlocking range α and the non-interlocking range β by changing the cam profile. In order to manufacture an operation arm 35 from a spring steel, a quenching process is required. The operation arm 35 manufactured in this manner may be unstable in shape and have great variation in acting position. Thus, positioning adjustment of such an operation arm 35 has been troublesome. Meanwhile, the embodiment of the present invention does not use the spring steel, but defines the interlocking range by the cam. Thus, positioning adjustment of the operation arm 35 according to the embodiment of the present invention is easy.

The cam mechanism is made of the long holes 35d, which guide the cable terminal 26 inserted thereinto. The cable terminal 26 is the fastening member provided at an end of the wire 23. The wire 23 is the connecting member via which the forward-reverse switching device 28 and the forward-reverse switching lever 14 are linked to each other. With this configuration, in order to define the positions of the forward-reverse switching lever 14 and the operation arm 35, it is only necessary to place the cable terminal 26 at ends of the long holes 35d. Thus, positioning of the operation arm 35 is easy.

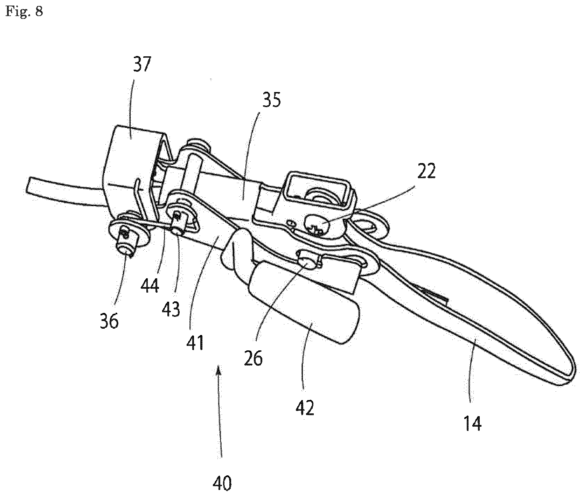

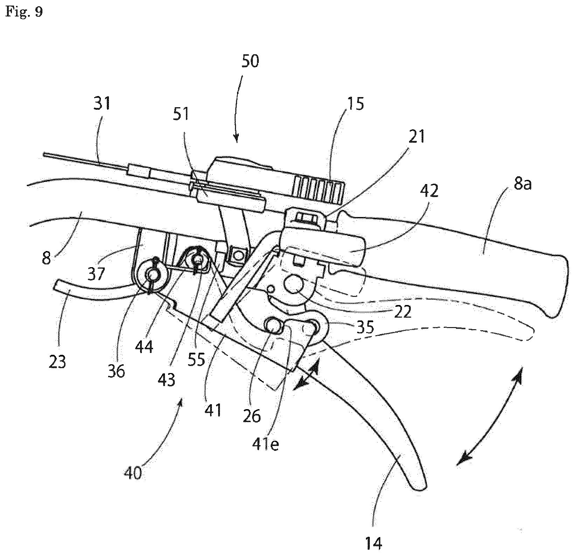

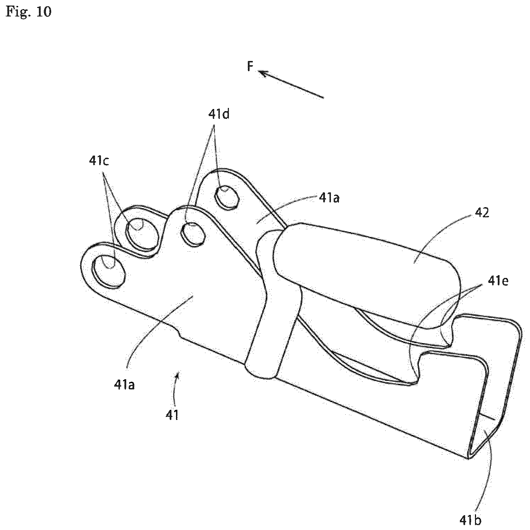

Next, the following describes the erroneous operation prevention mechanism 40 with reference to FIGs. 2 and 8 to 10.

The erroneous operation prevention mechanism 40 includes a restraining member 41, a releasing lever 42, a stopper pin 43, and a torsion spring 44, for example. The restraining member 41 is configured to restrain turning of the forward-reverse switching lever 14. The releasing lever 42 is used to release the restraining. The erroneous operation prevention mechanism 40 is disposed on the one of the left and right sides of the operation handle 8 on which the forward-reverse switching lever 14 is disposed (i.e., on the grip 8a on the right side). The restraining member 41 is disposed near the forward-reverse switching lever 14, and the restraining member 41 covers the operation arm 35 from below.

The restraining member 41 is made of a plate bent into a substantial U-shape in a rear view. The restraining member 41 includes left and right side plates 41a and a bottom plate 41b via which the side plates 41a are connected to each other. A distance between the side plates 41a is greater than a width of the operation arm 35. Consequently, the restraining member 41 can externally cover the operation arm 35 from below, which enables compact arrangement. The side plates 41a have pivoting fulcrum holes 41c in their front portions. The pivotal support shaft 36 is inserted into the pivoting fulcrum holes 41c and the pivoting fulcrum holes 35c of the operation arm 35. Thus, the restraining member 41 is supported pivotally about the pivotal support shaft 36.

The side plates 41a have pin holes 41d at locations rearward and upward of the pivoting fulcrum holes 41c, respectively. After the restraining member 41 is fitted to the operation arm 35 and pivotally fixed by the pivotal support shaft 36, the stopper pin 43 is inserted into the pin holes 41d. This prevents the restraining member 41 from being turned downward exceeding a predetermined angle.

Rear upper portions of the side plates 41a respectively have restraining recesses 41e that are opened forward and upward. In a state where the restraining member 41 is attached to the operation arm 35, the cable terminal 26 is positioned in the restraining recesses 41e.

One of the side plates 41a, which is on the inner side in a left-right direction of the machine body, is provided with the releasing lever 42 in its intermediate portion viewed in the front-rear direction. From the intermediate portion of the one of the side plates 41a, the releasing lever 42 protrudes rearward and upward. In the state where the restraining member 41 is attached to the operation arm 35, a rear upper end of the releasing lever 42 is located in front of and lateral to the grip 8a. Thus, the releasing lever 42 is disposed within a range in which the operator holding the grip 8a with his/her right hand can operate the releasing lever 42 with his/her thumb. Namely, the restraining member 41 and the releasing lever 42 can be turned integrally. Alternatively, the restraining member 41 and the releasing lever 42 may be formed integrally as a single member.

In the state where the pivotal support shaft 36 is attached to the restraining member 41 and the operation arm 35, the torsion spring 44 is externally attached to the pivotal support shaft 36. In this state, one end of the torsion spring 44 is fastened to the support 37, and the other end of the torsion spring 44 is fastened to the stopper pin 43 (or to the restraining member 41). The torsion spring 44 biases the restraining member 41 so that the restraining member 41 is turned upward.

With such a configuration, when the operator grips the forward-reverse switching lever 14 to select reverse traveling during the work, the cable terminal 26 attempts to move rearward, but cannot be turned since it comes in contact with the restraining recesses 41e of the restraining member 41. Thus, the operation for selecting reverse traveling is restrained. When the operator pushes the releasing lever 42 downward with his/her thumb in this state, the restraining recesses 41e moves downward, thereby releasing the restraining. When the operator grips the forward-reverse switching lever 14 in this state, the cable terminal 26 can move rearward. Then, as described above, the interlocking mechanism 30 causes the accelerator lever 15 to be turned to the low-speed side to reduce the number of revolutions of the engine, and then causes the forward-reverse switching device 28 to perform switchover to reverse traveling.

At the time when the releasing lever 42 is pushed downward, the stopper pin 43 comes in contact with an upper surface (connecting plate 35b) of the operation arm 35, thereby preventing the releasing lever 42 from being turned any further. From this, the operator can recognize, by his/her thumb, that the restraining has been released. In addition, from the accelerator lever 15 having been turned to the low-speed side in conjunction with the turning of the forward-reverse switching lever 14 after the releasing of the lock (restraining), the operator can easily judge a timing to release his/her thumb. When the operator releases his/her thumb from the releasing lever 42, the restraining member 41 attempts to turn upward by a biasing force of the torsion spring 44. However, the released state is maintained, since rear portions of upper surfaces of the restraining recesses 41e come into contact with a lower portion of the cable terminal 26.

When the operator releases his/her hand gripped the forward-reverse switching lever 14 to end reverse traveling, the forward-reverse switching lever 14 is pulled by a biasing force of the spring 27 via the wire 23, so that the forward-reverse switching lever 14 is turned downward and the cable terminal 26 moves forward. Then, the forward-reverse switching lever 14 is brought to its lower end position, and the restraining member 41 is turned upward by a biasing force of the torsion spring 44. Consequently, the cable terminal 26 is brought into the restraining recesses 41e, the operation arm 35 is lowered, and the releasing shaft 55 is lowered to be returned to its original state.

As described above, the erroneous operation prevention mechanism 40 is disposed near the forward-reverse switching lever 14, the erroneous operation prevention mechanism 40 being configured to restrain the forward-reverse switching lever 14 from being shifted to a position for reverse traveling when the forward-reverse switching lever 14 is operated. The erroneous operation prevention mechanism 40 includes: the restraining member 41 configured to restrain turning of the forward-reverse switching lever 14; and the releasing lever 42 used to release the restraining. With this configuration, an operation of the releasing lever 42 to release the restraining and an operation of the forward-reverse switching lever 14 to select reverse traveling can be performed by the operator substantially simultaneously with his/her single hand. Therefore, in order to select reverse traveling, the operator operates the forward-reverse switching lever 14 and the releasing lever 42 intentionally. Consequently, even if the operator grips the forward-reverse switching lever 14 carelessly, the agriculture machine would not travel in a reverse direction against the operator's intention. Thus, it is possible to reliably perform an operation for causing the agriculture machine to travel in a forward or reverse direction. In addition, since this configuration allows the operator to operate the releasing lever 42 and the forward-reverse switching lever 14 with his/her single hand, the operator can easily perform the operation to select reverse traveling, and does not have to change the hand to operate.

In addition, a direction in which the forward-reverse switching lever 14 is operated is upward, whereas a direction in which the releasing lever 42 is operated is downward. Thus, the directions in which the forward-reverse switching lever 14 and the releasing lever 42 are operated are different from each other. Thanks to this configuration, an erroneous operation hardly occurs. Furthermore, while holding the operation handle 8, the operator can easily operate these levers one by one consecutively (almost simultaneously).

Moreover, the restraining action of the erroneous operation prevention mechanism 40 is achieved between the forward-reverse switching lever 14 and the restraining member 41, the restraining action being performed by the cable terminal 26 provided at the end of the wire 23 via which the forward-reverse switching lever 14 and the forward-reverse switching device 28 are linked to each other. Thus, the cable terminal 26 is restrained by the restraining member 41, and serves also as a restrained member. This configuration provides a restraining structure with a small number of parts and a simple configuration.

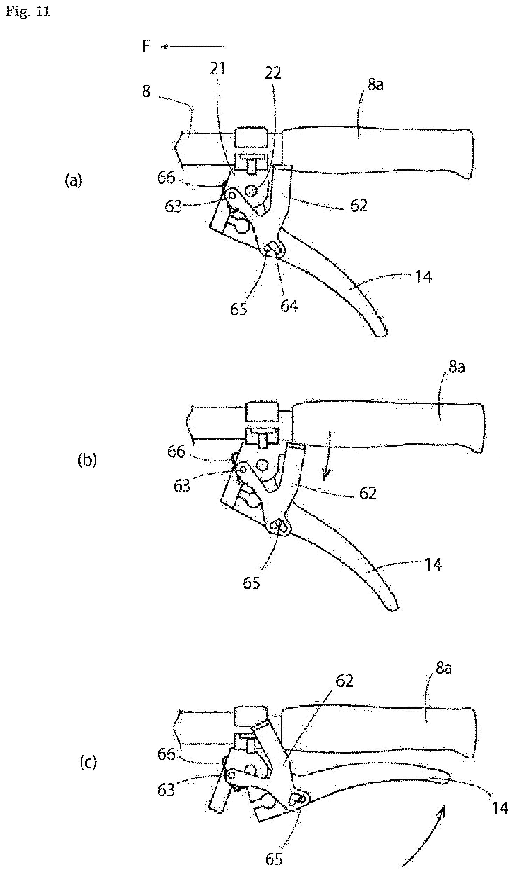

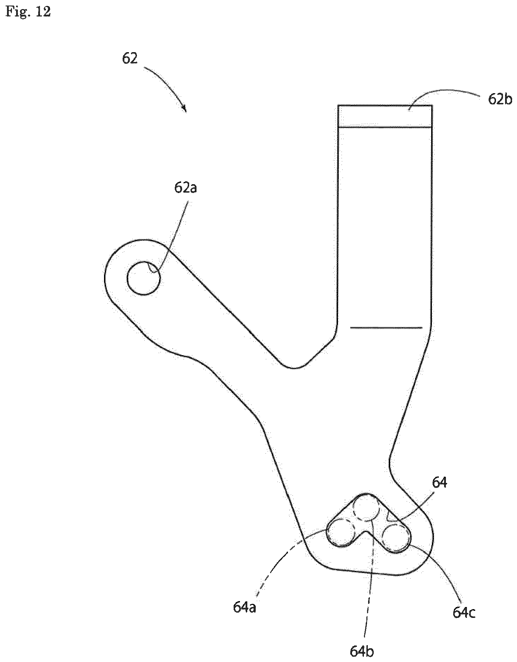

Next, the following describes an erroneous operation prevention mechanism 40 according to a second embodiment with reference to FIGs. 11 and 12.

A forward-reverse switching lever 14 is attached to a grip 8a of one of left and right sides of an operation handle 8. In the vicinity of the grip 8a of the one of the left and right sides of an operation handle 8, a releasing lever 62 integrally including a restraining member and a releasing mechanism is disposed. As illustrated in FIG. 12, the releasing lever 62 is substantially V-shaped in a side view. A first end of the releasing lever 62 has a pivoting hole 62a allowing the releasing lever 62 to be pivotally supported, via a pivotal support shaft 63, on an attachment member 21 fixed to the operation handle 8. To the pivotal support shaft 63, a torsion spring 66 is externally fitted. One end of the torsion spring 66 is fastened to the releasing lever 62, and the other end of the torsion spring 66 is fastened to the attachment member 21. The releasing lever 62 is biased counterclockwise in FIG. 11(a), i.e., in a direction of locking.

The releasing lever 62 has an intermediate portion in which a guide hole 64 serving as a restraining member is opened. Into the guide hole 64, a lock pin 65 protruding laterally from a front portion of a side surface of the forward-reverse switching lever 14 is inserted. The guide hole 64 is substantially inverse V-shaped in a side view. A front lower end of the guide hole 64 defines a lock position 64a, a center top end in a front-rear direction of the guide hole 64 defines a release position 64b, and a rear lower end of the guide hole 64 defines an acting position 64c.

A second end of the releasing lever 62 extends upward to be within operator's reach with his/her thumb when the operator holds the grip 8a. A tip of the second end of the releasing lever 62 is formed as a pressing portion 62b.

With such a configuration, during forward traveling, the lock pin 65 protruding from the forward-reverse switching lever 14 is at the lock position 64a of the guide hole 64, as illustrated in FIG. 11(a). In this state, even if the operator grips the forward-reverse switching lever 14 and tries to turn the forward-reverse switching lever 14, the forward-reverse switching lever 14 cannot be turned, since a long hole defined by the lock position 64a and the release position 64b of the guide hole 64 is perpendicular to a direction in which the lock pin 65 moves when the forward-reverse switching lever 14 is turned. When the operator pushes the pressing part 62b downward with his/her thumb in this state to cause the releasing lever 62 to move downward, the lock pin 65 is brought to the release position 64b (as illustrated in FIG. 11(b)), thereby releasing the restraining. When the operator grips the forward-reverse switching lever 14 in this state, the lock pin 65 is turned to reach the acting position 64c, as illustrated in FIG. 11(c). Consequently, a wire 23 is pulled, and accordingly a forward-reverse switching device 28 performs switchover, thereby causing a cultivator 1 to travel in a reverse direction.

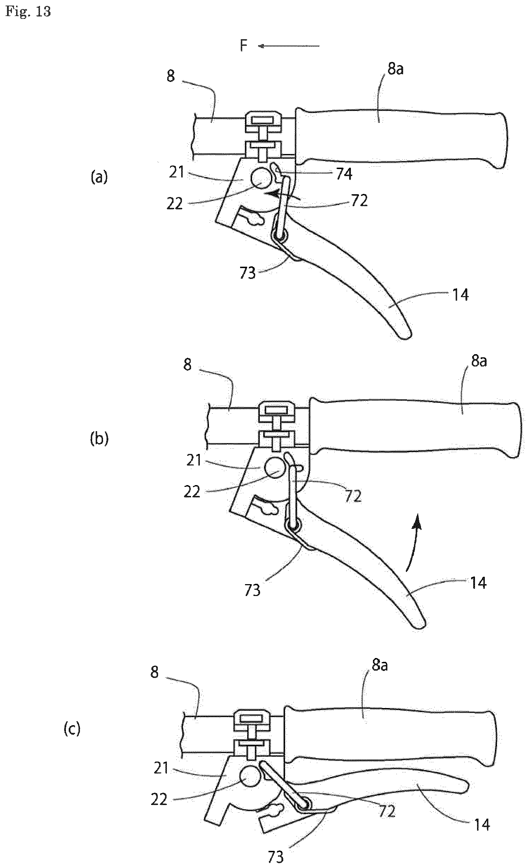

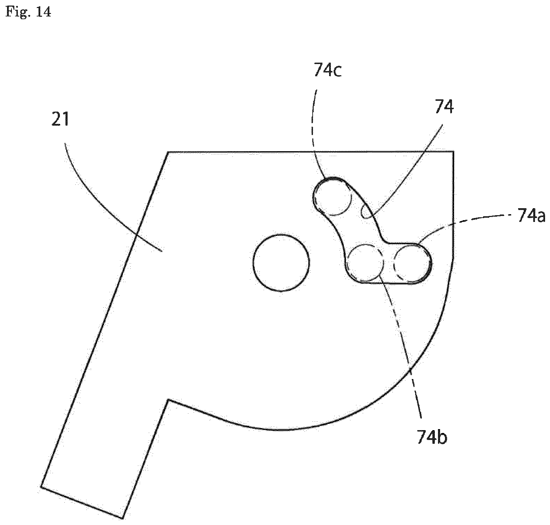

Next, the following describes an erroneous operation prevention mechanism 40 according to a third embodiment with reference to FIGs. 13 and 14.

A forward-reverse switching lever 14 is attached to a grip 8a of one of left and right sides of an operation handle 8. In the vicinity of the grip 8a of the one of the left and right sides of the operation handle 8, a releasing lever 72 is disposed. The releasing lever 72 is made of a bar-shaped member bent into a substantial C-shape in a rear view. The releasing lever 72 has a first side (lower side) that is horizontal and is pivotally supported on a front portion of a forward-reverse switching lever 14. To the lower horizontal portion of the releasing lever 72, a torsion spring 73 is externally fitted. The torsion spring 73 biases the releasing lever 72 so that the releasing lever 72 is turned rearward. The releasing lever 72 has a second side (upper side) that is horizontal and is inserted into a guide hole 74 opened in an attachment member 21.

The guide hole 74, which is formed in the attachment member 21, serves as a restraining member. As illustrated in FIG. 14, the guide hole 74 has a horizontal portion extending in a front-rear direction and an arc-shaped portion extending upward from a front end of the horizontal portion. The guide hole 74 has turning ends defining a lock position 74a, a release position 74b, and an acting position 74c, respectively.

With such a configuration, during forward traveling, the first end of the releasing lever 72 pivotally supported on the forward-reverse switching lever 14 is at the lock position 74a of the guide hole 74, as illustrated in FIG. 13(a). Even if an operator grips the forward-reverse switching lever 14 in this state, the forward-reverse switching lever 14 cannot be turned, since the upper horizontal portion of the releasing lever 72 located at the lock position 74a of the guide hole 74 cannot move upward. When the operator pushes the releasing lever 72 forward with his/her thumb in this state, the upper portion of the releasing lever 72 is brought to the release position 74b, as illustrated in FIG. 13(b). When the operator grips the forward-reverse switching lever 14 in this state, the upper portion of the releasing lever 72 is caused to move along the arc-shaped portion of the guide hole 74 to reach the acting position 74c, as illustrated in FIG. 13(c). Consequently, a wire 23 is pulled, and accordingly a forward-reverse switching device 28 performs switchover, thereby causing a cultivator 1 to travel in a reverse direction.

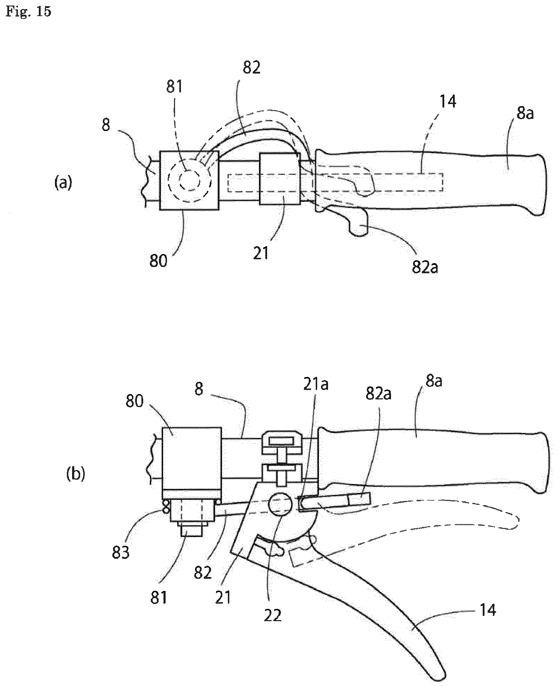

Next, the following describes an erroneous operation prevention mechanism 40 according to a fourth embodiment with reference to FIG. 15.

A forward-reverse switching lever 14 is attached to a grip 8a of one of left and right sides of an operation handle 8. In the vicinity of the grip 8a of the one of the left and right sides of the operation handle 8, a releasing lever 82 is disposed. The releasing lever 82 is substantially C-shaped in a plan view. The releasing lever 82 has a first end (front end) supported on a support shaft 81 in such a manner that the first end can be turned in a left-right direction. The releasing lever 82 has an intermediate portion detouring a pivotal support shaft 22 to reach a rear portion of an attachment member 21. The pivotal support shaft 22 pivotally supports the forward-reverse switching lever 14. The attachment member 21 has, in its rear portion, a cutout 21a serving as a restraining member. Into the cutout 21a, the intermediate portion of the releasing lever 82 is inserted. The releasing lever 82 has a second end (rear end) extending toward a location lateral to the forward-reverse switching lever 14 so as to be within operator's reach with his/her thumb when the operator holds the grip 8a with his/her right hand. A tip of the second end of the releasing lever 82 is formed as a pressing portion 82a.

The support shaft 81 protrudes downward from a support member 80, which is disposed in front of the attachment member 21. The support shaft 81 supports a front portion of the releasing lever 82 such that the releasing lever 82 can be turned in a left-right direction. To the support shaft 81, a torsion spring 83 is externally fitted. The torsion spring 83 biases the releasing lever 82 so that the releasing lever 82 is turned toward the attachment member 21 (i.e., clockwise in a plan view). Thus, the intermediate portion of the releasing lever 82 is fitted to the cutout 21a. Consequently, the releasing lever 82 comes on a rotation locus of the base of the forward-reverse switching lever 14, thereby restraining turning of the forward-reverse switching lever 14.

With such a configuration, during forward traveling, the intermediate portion of the releasing lever 82 is fitted to the cutout 21a of the attachment member 21, and therefore the forward-reverse switching lever 14 cannot be turned. When the operator pushes the releasing lever 82 laterally with his/her thumb in this state, the intermediate portion of the releasing lever 82 leaves the cutout 21a, thereby releasing the restraining. Consequently, the operator can turn the releasing lever 82. Turning the releasing lever 82 pulls a wire 23, and accordingly a forward-reverse switching device 28 performs switchover, thereby causing a cultivator 1 to travel in a reverse direction. In FIGs. 11, 13, and 15, some components, such as the accelerator lever 15 and the interlocking mechanism 30, are not illustrated.

As described in the foregoing embodiments, the operator cannot turn the forward-reverse switching lever 14 for selecting reverse traveling unless the operator pushes the releasing lever 42, 62, 72, or 82. Thus, it is possible to prevent a phenomenon that the agriculture machine travels in a reverse direction against the operator's intention even when the operator unintentionally grips the forward-reverse switching lever 14.

As described above, the forward-reverse switching operation device 20 for the cultivator 1, which is the agriculture machine, includes the forward-reverse switching lever 14 provided to one of the left and right sides of the operation handle 8, the forward-reverse switching lever 14 being used to cause the forward-reverse switching device 28 to switch between forward traveling and reverse traveling, wherein the erroneous operation prevention mechanism 40 is provided to the one of the left and right sides of the operation handle 8, the erroneous operation prevention mechanism 40 is configured to restrain the forward-reverse switching lever 14 from being shifted to a position for reverse traveling when the forward-reverse switching lever is operated, the erroneous operation prevention mechanism 40 includes the restraining member 41 configured to restrain turning of the forward-reverse switching lever and the releasing lever 42, 62, 72, or 82 used to release the restraining, and the forward-reverse switching lever 14 and the releasing lever 42, 62, 72, or 82 are operable simultaneously by a single hand of an operator. With this configuration, the operator cannot turn the forward-reverse switching lever 14 for selecting reverse traveling unless the operator pushes the releasing lever 42, 62, 72, or 82. Thus, it is possible to prevent a phenomenon that the cultivator 1 travels in a reverse direction against the operator's intention even when the operator unintentionally grips the forward-reverse switching lever 14. With this configuration, the operator can operate both of the releasing lever 42, 62, 72, or 82 and the forward-reverse switching lever 14 with his/her single hand. This eliminates the need to change the operator's hand to operate the releasing lever 42, 62, 72, or 82 and the forward-reverse switching lever 14 one by one. Consequently, the operator can operate these levers reliably without stopping the work.

In addition, a direction in which the forward-reverse switching lever 14 is operated to select reverse traveling and a direction in which the releasing lever 42, 62, 72, or 82 is operated to release the restraining are different from each other. With this configuration, the operator may operate the releasing lever 42, 62, 72, or 82 downward, forward, or laterally, and thereafter the operator may grip the forward-reverse switching lever 14 upward to perform the switchover. The operator can operate these levers in this manner while holding the operation handle 8 with his/her single hand. In addition, the forward-reverse switching lever 14 and the releasing lever 42, 62, 72, or 82 are operated in the direction of gripping. Therefore, the operator can easily apply force. Consequently, an erroneous operation hardly occurs.

### Industrial Applicability

The present invention is applicable to walking-type cultivators used for works such as tilling and ridging in paddy fields and dry fields.

### Reference Signs List

- α: interlocking range
- β: non-interlocking range
- 3: engine
- 8: operation handle
- 14: forward-reverse switching lever
- 15: accelerator lever
- 20: forward-reverse switching operation device
- 23: wire
- 26: cable terminal
- 28: forward-reverse switching device
- 30: interlocking mechanism
- 35: operation arm
- 40: erroneous operation prevention mechanism
- 41: restraining member
- 42: releasing lever

## Claims

1. A forward-reverse switching operation device for an agriculture machine, comprising:
a forward-reverse switching lever provided to one of left and right sides of an operation handle, the forward-reverse switching lever being used to cause a forward-reverse switching device to switch between forward traveling and reverse traveling, wherein
an erroneous operation prevention mechanism is provided to the one of the left and right sides of the operation handle, the erroneous operation prevention mechanism being configured to restrain the forward-reverse switching lever from being shifted to a position for reverse traveling when the forward-reverse switching lever is operated,
the erroneous operation prevention mechanism includes
a restraining member configured to restrain turning of the forward-reverse switching lever and
a releasing lever used to release the restraining, and
the forward-reverse switching lever and the releasing lever are operable simultaneously by a single hand of an operator.

2. The forward-reverse switching operation device according to claim 1, wherein a direction in which the forward-reverse switching lever is operated to select reverse traveling and a direction in which the releasing lever is operated to release the restraining are different from each other.

3. The forward-reverse switching operation device according to claim 2, wherein a restraining action of the erroneous operation prevention mechanism is achieved between the forward-reverse switching lever and the restraining member, the restraining action being performed by a cable terminal of a wire via which the forward-reverse switching lever and the forward-reverse switching device are linked to each other.

4. A forward-reverse switching operation device for an agriculture machine, comprising:
a forward-reverse switching lever provided to an operation handle, the forward-reverse switching lever being linked to a forward-reverse switching device and being used to switch between forward traveling and reverse traveling, wherein
an accelerator lever is disposed near the forward-reverse switching lever, the accelerator lever being used to adjust the number of revolutions of an engine,
an interlocking mechanism is interposed between the forward-reverse switching lever and the accelerator lever, the interlocking mechanism being configured to cause the accelerator lever to move to a low-speed side in conjunction with an operation of the forward-reverse switching lever for selecting reverse traveling, and
the interlocking mechanism has an interlocking range in which the accelerator lever operates in conjunction with an operation of the forward-reverse switching lever and a non-interlocking range in which the forward-reverse switching device is actuated by an operation of the forward-reverse switching lever but the accelerator lever does not operate in conjunction with the operation of the forward-reverse switching lever.

5. The forward-reverse switching operation device according to claim 4, wherein the interlocking range and the non-interlocking range are defined in a cam mechanism in an operation arm included in the interlocking mechanism interposed between the forward-reverse switching lever and the accelerator lever.

6. The forward-reverse switching operation device according to claim 5, wherein the cam mechanism is made of a long hole, which guides a fastening member inserted thereinto, the fastening member being provided at an end of a connecting member via which the forward-reverse switching device and the forward-reverse switching lever are linked to each other.
